# EUROPEAN PATENT SPECIFICATION

(11) **EP 2 342 521 B1**
(45) Date of publication and mention of the grant of the patent: **27.02.2019**
(21) Application number: 09741040.1
(22) Date of filing: 05.10.2009
(51) Int. Cl.: F28D 9/00, B23K 1/00

(54) **HEAT EXCHANGER**
WÄRMETAUSCHER
ECHANGEUR DE CHALEUR

(30) Priority: 16.10.2008 SE 0802203
(43) Date of publication of application: 13.07.2011
(60) Divisional application: 18170571.6
(73) Proprietor: Alfa Laval Corporate AB, 221 00 Lund (SE)
(72) Inventor: MUNARI, Matteo, I-IT-35124 Padova (IT)
(74) Representative: Alfa Laval Attorneys
(86) International application number: PCT/SE2009/051101
(87) International publication number: WO 2010/044726

(56) References cited:
- WO-A-01/87529
- WO-A-2005/038382
- WO-A-2005/071342

## Description

### TECHNICAL FIELD

The present invention relates to a heat exchanger comprising a plurality of novel connections.

### BACKGROUND ART

Plate heat exchangers are used in different fields of the industry for a number of different purposes. Heat exchangers often comprises one type of plate which is mounted with every other plate rotated 180 degrees to form two different channels for the fluids, one channel for the cooling medium and one channel for the product that is to be cooled. In copper brazed heat exchangers, e.g. where the heat exchanger plates are made from stainless steel, the complete plate package is brazed together. This accomplishes a brazed copper sealing around the edge of the plates. At the same time, the contact points between the plates are also brazed, which helps the heat exchanger to withstand the effects of high pressures and high temperatures.

The heat exchanger also comprises a front cover plate and a back cover plate made of a thicker sheet metal than the heat exchanger plates. The purpose of the cover plates is to provide stability to the heat exchanger and to provide mounting positions for brackets or the like. The front and/or rear cover plate will also contain connection ports for the fluids that the heat exchanger is adapted for. A heat exchanger can be supplied with a number of different standard connections. The connections are copper brazed to the cover plates. The heat exchanger plates and the connections are brazed in the same brazing process. The brazing of the complete heat exchanger is normally done in a heated oven, in which the heat exchanger is heated to above the melting point of the brazing material.

In order to produce the heat exchangers in a cost-effective way, as many heat exchangers as possible are packed into the oven. Since the connections extend outwards from the cover plates, the connections will reduce the usable volume of the oven. In some cases, the height of the connections is of the same magnitude as the height of the heat exchanger body, which means that the number of heat exchangers that can be brazed at the same time is reduced by half.

There is thus room for an improved brazed heat exchanger.

### DISCLOSURE OF INVENTION

An object of the invention is therefore to provide an improved brazed heat exchanger that allows for a more flexible and cost-effective production. Another object of the invention is to provide an improved brazed heat exchanger that reduces the number of variants of the heat exchanger. Another object of the invention is to provide a heat exchanger that is easier and cheaper to connect for the customer. A further object of the invention is to provide a method for the production of brazed heat exchangers that is more flexible and cost-effective.

The solution to the problem according to the invention is described in the characterizing part of claim 1. Claims 2 and 3 contain advantageous embodiments of the heat exchanger. Claims 4 and 5 contain an advantageous method for producing brazed heat exchangers.

With a heat exchanger, comprising a plurality of heat exchanger plates having a corrugated pattern, a front cover plate and a rear cover plate, where the heat exchanger plates are fixedly attached by brazing to each other and to the front cover plate and the rear cover plate, and where the front and/or rear cover plate comprises a plurality of connection ports, which comprise an outwardly extending collar shaped from the same material as the cover plate, wherein the heat exchanger further comprises a connection tubing fixedly attached to one of the collars, the object of the invention is achieved in that the connection tubing is brazed to the collar using a brazing material having a lower melting point than the brazing material for the heat exchanger plates.

By this first embodiment of the heat exchanger, a heat exchanger that allows for an increased production capacity in an existing production line is provided. The production of different variants of heat exchangers is also improved, in that only one type of heat exchanger must be produced and stocked. Since the connections are applied after the production of the heat exchanger, a flexible and cost-effective manufacturing solution is obtained.

The advantage of having a collar to which the connection can be applied to is that the connection can be applied in a way that will not affect the contact points of the heat exchanger plates. In this way, it is possible to apply the connection after the production of the heat exchanger. This makes it possible for a manufacturer to supply many variants of connections with only one type of produced heat exchanger. The connection is preferably applied with induction brazing.

According to the invention, the connection tubing is brazed to the collar using a brazing material having a melting point that is lower than the melting point of the brazing material for the heat exchanger plates. This is advantageous when the heat exchanger plates and the cover plates are brazed in one operation and the connection tubing are brazed in another operation. The use of a lower melting point for the brazing of the connections will reduce the risk of un-brazing contact points of the heat exchanger plates. Another advantage of this is that connections made from copper can be used, instead of using connections made from stainless steel.

In an inventive method for the assembly of a brazed heat exchanger, the steps of heating the heat exchanger in an oven so that the brazing material applied to the heat exchanger plates and the cover plates brazes the heat exchanger together, cooling the heat exchanger and brazing a tubular connection to an outwardly extending collar of the cover plate using an inductive brazing method are comprised. The advantage of the inventive method is that a flexible and cost-effective way of producing a number of different variants of the heat exchanger is provided for. The inventive method allows for only one type of heat exchanger to be produced, and thus to be stocked. At delivery, the different connections are mounted.

In an advantageous development of the inventive method, the tubular connections are brazed to the collar using a brazing material having a lower melting point than the brazing material for the heat exchanger plates. This is especially advantageous when the heat exchanger and the cover plate are brazed in one operation, and the connections are brazed in another operation. The use of a lower melting point for the brazing of the connections will reduce the risk of un-brazing contact points of the heat exchanger plates. By using the lower melting point material and inductive brazing method, reliable joints are obtained. Another advantage of this is that connections made from copper can be used, instead of using connections made from stainless steel. The use of copper connections is further advantageous in that it will allow the customer to solder the connection to a copper tubing comprised in the heat exchanger system in an easy way.

### BRIEF DESCRIPTION OF DRAWINGS

The invention will be described in greater detail in the following, with reference to the embodiments that are shown in the attached drawings, in which
- Fig. 1: shows a known heat exchanger,
- Fig. 2: shows a heat exchanger according to the invention without connections,
- Fig. 3: shows a cross-section of a first port opening according to the invention,
- Fig. 4: shows a cross-section of a second port opening according to the invention, and
- Fig. 5 a-c: shows different examples of connections for the heat exchanger according to the invention.

### MODES FOR CARRYING OUT THE INVENTION

The embodiments of the invention with further developments described in the following are to be regarded only as examples and are in no way to limit the scope of the protection provided by the patent claims.

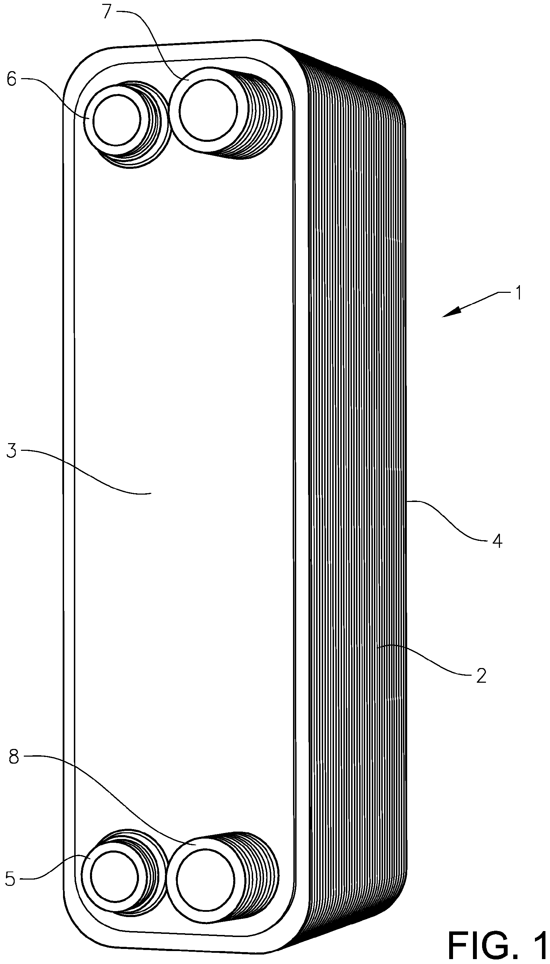

Fig. 1 shows a prior art heat exchanger. The heat exchanger 1 comprises a plurality of heat exchanger plates 2 permanently joined together. The heat exchanger further comprises a front cover plate 3 and a rear cover plate 4 also permanently joined to the heat exchanger plates. The heat exchanger 1 is produced by brazing the plates together in a heating oven. Before the plates are joined, the periphery of each plate and the contact points of the plates are coated with a brazing material, which will allow the plates to braze together when the oven is heated to a temperature above the melting temperature of the brazing material.

The shown brazed heat exchanger is primarily intended for the use in climate applications. The heat exchanger will be described when used as an evaporator, through which a refrigerant that is to be heated and water or brine that is to be cooled circulate. In the shown heat exchanger, all the connections are provided in the front cover plate. It is however also possible to place one or more of the connections in the rear cover plate. The front cover plate thus comprises a refrigerant inlet port 5, a refrigerant outlet port 6, a water inlet port 7 and a water outlet port 8.

At all the port openings, a connection is fixedly mounted to the front cover plate. A connection connects a port of the heat exchanger with the system in which the heat exchanger is to be used. The connection at each port is thus provided with some kind of connection means, such as a thread or a clamping section, adapted to connect the port to an external tubing. Since different users have different demands, a heat exchanger may be provided with a number of different connections, which means that several types of standardised heat exchangers must be produced and stored.

Each port opening in the front cover plate is a cut-out hole. In the hole, a connection with a specific flange adapted to bear on the cover plate surface and successively be brazed to the front cover plate is inserted together with brazing material. When the heat exchanger plates are brazed together, the connections will also be brazed to the front cover plate. This is done in the same process in the heating oven. Such a heat exchanger is well-known in the art and will not be described further.

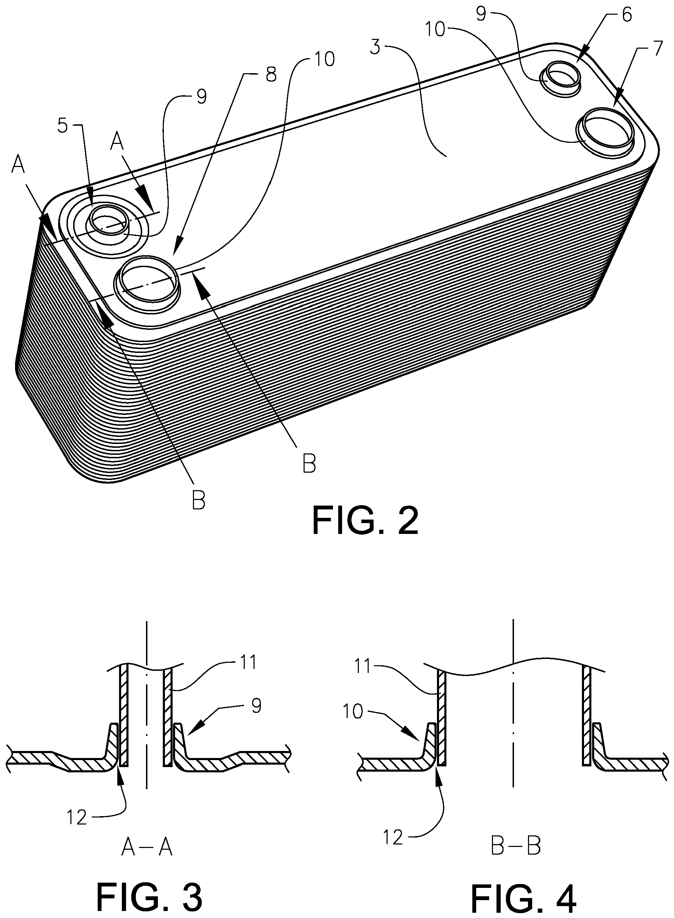

Fig. 2 shows a heat exchanger according to the invention. In the heat exchanger, a novel connection arrangement is used. The connection comprises an outwardly extending collar shaped from the same material as the cover plate. The collar is manufactured in a cold forming manufacturing process by pressing the areas around the port openings of the front cover plate with an appropriate tool. In this way, it is possible to obtain an outwardly extending collar having a height of between 5 and 10 mm when the cover plate is 2 mm thick. The inner surface of the collar is preferably perpendicular to the cover plate. Due to the pressing of the collar, the outer surface of the collar will be slightly tapered. By limiting the height of the collar, the mechanical properties for the port region of the cover plate can be preserved. In Fig. 2, the refrigerant inlet port 5 and outlet port 6 are shown with a first collar type 9 and the water outlet port 7 and inlet port 8 are shown with a second collar type 10.

The front and/or rear cover plates having opening collars for the ports are brazed to the heat exchanger plates in an oven. During the manufacturing of the heat exchangers, as many heat exchangers as possible are placed in the oven. During a normal production run with prior art heat exchangers, the connections for the outlet and inlet ports take up a large volume in the oven. In one example, the height of the connection may be in the same order as the height of the heat exchanger body, when the connections are on one side only. This may be the case e.g. for a 12 plate heat exchanger, where a typical connection may be 24 mm high and the heat exchanger body is 27 mm high. For a heat exchanger having connections on both sides, the ratio between the height of the connections and the heat exchanger body will be even higher.

One advantage of replacing the prior art connections with collars for the port connections is that more heat exchangers may be produced at the same time, i.e. more heat exchangers will fit in the oven at the same time. For the above mentioned 12 plate heat exchanger with single-sided connections, a 7 mm collar will reduce the total height of the complete heat exchanger from 51 mm to 31 mm. Thus, more heat exchangers may be produced at the same time.

After the heat exchanger is brazed, a tubular connection is fixedly mounted to the collar. This is preferably also done by brazing. In order to prevent un-brazing of some of the contact points between the heat exchanger plates, it is important that the brazing is done without to much heat that may heat up the region around the port. By using induction brazing, the tubular connections can be brazed to the collar with only heat applied to the region that is to be brazed, the heating process is automatically kept under control and the thermal cycle can be reproduced.

The connections may be brazed to the collars by using a brazing material having a melting point that is lower than the melting point of the brazing material for the heat exchanger plates. The advantage of using a lower melting point for the connection brazing is that it will reduce the risk of un-brazing contact points of the heat exchanger plates. At the same time, the brazing of the connections can be made quicker which will reduce the risk of un-brazing even more. Another advantage of this is that connections made from copper can be used, instead of using connections made from stainless steel. The use of copper connections is especially advantageous for the user of the heat exchanger, since this will allow the user to connect the heat exchanger to the heat exchanger system in a less expensive and more reliable way.

Fig. 3 shows a cross-section of the first collar 9 with an attached connection tubing 11. As can be seen in the figure, the inner surface of the collar is perpendicular to the cover plate. The outer collar surface is somewhat tapered due to the pressing of the collar. Around the collar, an embossed circular area is provided. This will improve the stability of the port opening and the ability to withstand pressure variations. A connection tubing is inserted into the collar and brazing material is applied in the gap 12 between the inside surface of the collar and the outer surface of the connection. The brazing material may be applied before or after the connection is mounted.

Fig. 4 shows a cross-section of the second collar 10 with an attached connection tubing 11. As can be seen in the figure, the inner surface of the collar is perpendicular to the cover plate. The outer collar surface is somewhat tapered due to the pressing of the collar. A connection tubing is inserted into the collar and brazing material is applied in the gap 12 between the inside surface of the collar and the outer surface of the adapter. The brazing material may be applied before or after the adapter is mounted.

The tubular connection 11 is brazed to the collar with an induction tool adapted to the dimensions of the collar. The induction tool is preferably controlled in an automatic manner in order to ensure that the right amount of heat and thus the right temperature and thermal cycle is used during the brazing. With induction brazing, the heat is only applied directly to the brazing area. Since this type of brazing is relatively quick, the applied heat will not warm up the surrounding region enough to un-braze any contact points. Excessive heat may both un-braze contact points of the heat exchanger plates and may create excessive oxidation of the material of the cover plate. The advantage of brazing the adapter tubing in this way is that the total time for the brazing is reduced compared with manual brazing and at the same time the quality is enhanced. It is possible to braze all adapter tubing at the same time by using appropriate tooling, which will reduce the manufacturing time even more.

The tubular connection may have different shapes and connection areas, but is preferably made from a copper tube. The side of the connection that is to be inserted into the collar is straight. The opposite side may have different shapes, e.g. tapered ends with different dimensions. This side is adapted to be connected to the system in which the heat exchanger is to be used. It is therefore possible to supply different adapters for different customers in a simple way. The advantage of applying the adapters after the brazing of the heat exchanger is that several variants of the heat exchanger may be offered without the need to stock more than one type of heat exchanger. The length of the adapter may be selected freely, but the length should preferably allow the user of the heat exchanger to connect a tubing to the connection, e.g. by soldering, without affecting the brazing of the adapter itself.

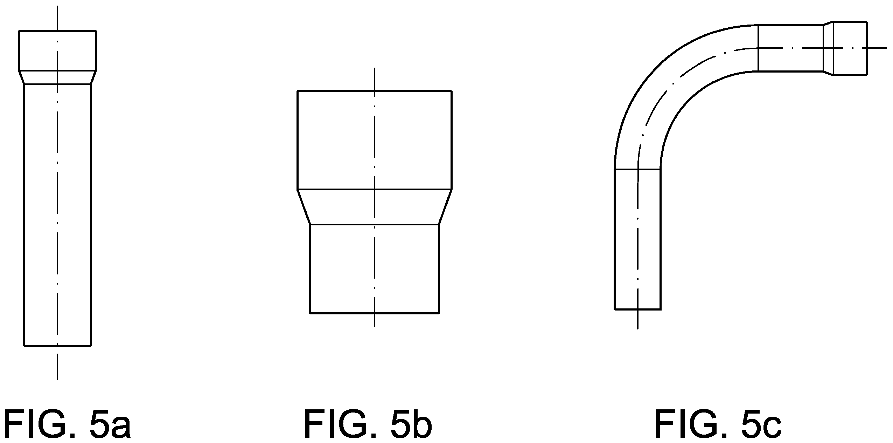

Fig.5 shows examples of different connections. Fig. 5a shows a straight, relatively thin tubular connection with a relatively short tapered connection part. Fig. 5b shows a straight, tubular connection with a tapered connection part. Fig. 5c shows a bent, relatively thin tubular connection. Other designs are of course also possible, depending on the needs of the customer. Since the connections may be made from a simple copper tubing, it is easy to offer different variants of connections to the customer, also in relatively small numbers.

One advantage of the above described method is that there is no need to manufacture different types of heat exchangers. In known methods, heat exchangers with all variants of connectors must be produced and kept in stock. With the inventive method, only one type of heat exchanger must be produced. Afterwards, the selected type of connection tubing is applied, which means that only one type of heat exchanger must be stocked. The connection is preferably applied by the manufacturer, but it is also possible that large customer will have their own induction brazing equipment.

Another advantage of the inventive method is that the method allows the user to connect a system directly to the heat exchanger in an easier and more reliable way. In known heat exchangers, the connections at the ports are made from stainless steel when the heat exchanger is made from stainless steel. The joint between a stainless steel connection and a copper tubing is both costly and will also require a relatively high knowledge from the customers in order to make a reliable connection. With the use of a copper connection on the heat exchanger, the user must only solder or clamp the tubular copper connection of the heat exchanger to the copper tubing of the system, both methods being easy and reliable. The customer will thus obtain cheaper connections with a high reliability.

The invention is not to be regarded as being limited to the embodiments described above, a number of additional variants and modifications being possible within the scope of the subsequent patent claims. The described method may be used for heat exchangers of different sizes.

### REFERENCE SIGNS

### PRIOR ART:

- 1:: Heat exchanger
- 2:: Heat exchanger plate
- 3:: Front cover plate
- 4:: Rear cover plate
- 5:: Refrigerant inlet port
- 6:: Refrigerant outlet port
- 7:: Water inlet port
- 8:: Water outlet port
- 9:: First collar
- 10:: Second collar
- 11:: Connection tubing
- 12:: Gap

## Claims

1. Heat exchanger, comprising a plurality of heat exchanger plates (2) having a corrugated pattern, a front cover plate (3) and a rear cover plate (4), where the heat exchanger plates are fixedly attached by brazing to each other and to the front cover plate and the rear cover plate, and where the front and/or rear cover plate comprises a plurality of connection ports (5, 6, 7, 8), which comprise an outwardly extending collar (9, 10) shaped from the same material as the cover plate, wherein the heat exchanger further comprises a connection tubing (11) fixedly attached to one of the collars (9, 10), **characterizedin** that the connection tubing is brazed to the collar using a brazing material having a lower melting point than the brazing material for the heat exchanger plates.

2. Heat exchanger according to claim 1, **characterized in that** the connection tubing is induction brazed to the collar.

3. Heat exchanger according to any one of claims 1 or 2, **characterized in that** the connection tubing is made from copper and the cover plate is made from stainless steel.

4. Method for the assembly of a brazed heat exchanger having tubular connections, wherein at least one of the heat exchanger's cover plates (3, 4) comprises a plurality of connection ports (5, 6, 7, 8), which comprise an outwardly extending collar (9, 10) shaped from the same material as the cover plate, comprising the steps of:
- heating the heat exchanger in an oven so that the brazing material applied to the heat exchanger plates and the cover plates brazes the heat exchanger together,
- cooling the heat exchanger, **characterized in** the step of:
brazing a tubular connection to one of the collars on the cover plate using an induction brazing method with a brazing material having a lower melting point than the melting point of the brazing material for the heat exchanger plates.

5. Method according to claim 4, **characterized in that** the cover plate is made from stainless steel and the tubular connection is made from copper.

## Patentansprüche

1. Wärmetauscher, der mehrere Wärmetauscherplatten (2), die ein gewelltes Muster aufweisen, eine vordere Abdeckplatte (3) und eine hintere Abdeckplatte (4) umfasst, wobei die Wärmetauscherplatten durch Hartlöten unbeweglich aneinander und an der vorderen Abdeckplatte und der hinteren Abdeckplatte befestigt sind und wobei die vordere und/oder die hintere Abdeckplatte mehrere Verbindungsanschlüsse (5, 6, 7, 8) umfassen, die einen sich nach außen erstreckenden Bund (9, 10) umfassen, der aus dem gleichen Werkstoff geformt ist wie die Abdeckplatte, wobei der Wärmetauscher ferner eine Verbindungsverrohrung (11) umfasst, die unbeweglich an einem der Bünde (9, 10) befestigt ist,
**dadurch gekennzeichnet, dass** die Verbindungsverrohrung unter Verwendung eines Hartlotwerkstoffs an den Bund hartgelötet ist, der einen niedrigeren Schmelzpunkt aufweist als der Hartlotwerkstoff für die Wärmetauscherplatten.

2. Wärmetauscher nach Anspruch 1, **dadurch gekennzeichnet, dass** die Verbindungsverrohrung durch Induktion an den Bund hartgelötet ist.

3. Wärmetauscher nach Anspruch 1 oder 2, **dadurch gekennzeichnet, dass** die Verbindungsverrohrung aus Kupfer hergestellt ist und die Abdeckplatte aus rostfreiem Stahl hergestellt ist.

4. Verfahren für den Zusammenbau eines hartgelöteten Wärmetauschers, der Rohrverbindungen aufweist, wobei wenigstens eine der Abdeckplatten (3, 4) des Wärmetauschers mehrere Verbindungsanschlüsse (5, 6, 7, 8) umfasst, die einen sich nach außen erstreckenden Bund (9, 10) umfassen, der aus dem gleichen Werkstoff geformt ist wie die Abdeckplatte, wobei das Verfahren die folgenden Schritte umfasst:
- Erhitzen des Wärmetauschers in einem Ofen, so dass der auf die Wärmetauscherplatten und die Abdeckplatten aufgebrachte Hartlotwerkstoff den Wärmetauscher hart zusammenlötet,
- Abkühlen des Wärmetauschers,
**gekennzeichnet durch** den folgenden Schritt:
Hartlöten einer Rohrverbindung an einen der Bünde an der Abdeckplatte unter Verwendung eines Induktionshartlötverfahrens mit einem Hartlotwerkstoff, der einen Schmelzpunkt aufweist, der niedriger ist als der Schmelzpunkt des Hartlotwerkstoffs für die Wärmetauscherplatten.

5. Verfahren nach Anspruch 4, **dadurch gekennzeichnet, dass** die Abdeckplatte aus rostfreiem Stahl hergestellt ist und die Rohrverbindung aus Kupfer hergestellt ist.

## Revendications

1. Échangeur de chaleur, comprenant une pluralité de plaques d'échangeur de chaleur (2) présentant un motif ondulé, une plaque de couverture avant (3) et une plaque de couverture arrière (4), dans lequel les plaques d'échangeur de chaleur sont fixées de manière fixe par brasage l'une à l'autre et à la plaque de couverture avant et à la plaque de couverture arrière, et dans lequel la plaque de couverture avant et/ou arrière comprend une pluralité d'orifices de raccordement (5, 6, 7, 8) qui comprennent un collier s'étendant vers l'extérieur (9, 10) façonné à partir du même matériau que la plaque de couverture, dans lequel l'échangeur de chaleur comprend en outre un tubage de raccordement (11) fixé de manière fixe à l'un des colliers (9, 10),
**caractérisé en ce que** le tubage de raccordement est soudé par brasure au collier en utilisant un matériau de brasage présentant un point de fusion inférieur au matériau de brasage pour les plaques d'échangeur de chaleur.

2. Échangeur de chaleur selon la revendication 1, **caractérisé en ce que** le tubage de raccordement est soudé par brasure par induction au collier.

3. Échangeur de chaleur selon l'une quelconque des revendications 1 ou 2, **caractérisé en ce que** le tubage de raccordement est réalisé en cuivre et la plaque de couverture est réalisée en acier inoxydable.

4. Procédé pour l'assemblage d'un échangeur de chaleur soudé par brasure présentant des raccordements tubulaires, dans lequel au moins une des plaques de couverture de l'échangeur de chaleur (3, 4) comprend une pluralité d'orifices de raccordement (5, 6, 7, 8), qui comprennent un collier s'étendant vers l'extérieur (9, 10) façonné à partir du même matériau que la plaque de couverture, comprenant les étapes consistant à :
- chauffer l'échangeur de chaleur dans un four de sorte que le matériau de brasage appliqué aux plaques de l'échangeur de chaleur et aux plaques de couverture soude par brasure l'échangeur de chaleur ensemble,
- refroidir l'échangeur de chaleur,
**caractérisé par** l'étape de :
brasage d'un raccordement tubulaire à l'un des colliers sur la plaque de couverture en utilisant un procédé de brasage par induction avec un matériau de brasage présentant un point de fusion inférieur au point de fusion du matériau de brasage pour les plaques d'échangeur de chaleur.

5. Procédé selon la revendication 4, **caractérisé en ce que** la plaque de couverture est réalisée en acier inoxydable et le raccordement tubulaire est réalisé en cuivre.
